# EUROPÄISCHE PATENTSCHRIFT

(11) **EP 1 294 596 B1**
(45) Veröffentlichungstag und Bekanntmachung des Hinweises auf die Patenterteilung: **10.08.2005**
(21) Anmeldenummer: 01944951.1
(22) Anmeldetag: 23.05.2001
(51) Int. Cl.: B60S 1/38

(54) **SCHEIBENWISCHER FÜR KRAFTFAHRZEUGE**
WINDSHIELD WIPER FOR MOTOR VEHICLES
ESSUIE-GLACE POUR VEHICULES AUTOMOBILE

(30) Priorität: 09.06.2000 DE 10028628
(43) Veröffentlichungstag der Anmeldung: 26.03.2003
(73) Patentinhaber: Robert Bosch GmbH, 70422 Stuttgart (DE)
(72) Erfinder: HERINCKX, Dirk, B-3350 Drieslinter (BE); ROEKENS, Jurgen, B-1820 Steenokkerseel (BE)
(74) Vertreter: Rau, Albrecht
(86) Internationale Anmeldenummer: PCT/DE2001/001963
(87) Internationale Veröffentlichungsnummer: WO 2001/094166

(56) Entgegenhaltungen:
- DE-A- 2 336 071
- DE-A- 2 401 208
- DE-A- 19 833 665
- US-A- 4 909 653

## Beschreibung

Die Erfindung betrifft einen Scheibenwischer für Kraftfahrzeuge gemäß dem Oberbegriff des Anspruches 1.

Aus dem Stand der Technik sind zahlreiche Möglichkeiten bekannt, um bei einem Scheibenwischer einen mit dem Wischerarm verbundenen Tragbügel gelenkig mit dem ein Wischerblatt tragenden Unterbügel zu verbinden. Die meisten Gelenke zur Verbindung von Unterbügel und Tragbügel sind kompliziert aufgebaut und für eine automatische Montage ungeeignet.

Aus der DE 23 36 071 A ist ein Scheibenwischer für Windschutzscheiben von Fahrzeugen bekannt, der einen Tragbügel und einen an den Tragbügel über ein Gelenk angelenkten Unterbügel umfasst. Gemäß einem Ausführungsbeispiel weist das Gelenk einen im Wesentlichen U-förmigen Querschnitt auf, während es gemäß einer anderen Ausführungsform im Querschnitt oval ist. Nachteilig bei diesem bekannten Scheibenwischer ist, dass Schabgeräusche zwischen dem Tragbügel und dem Unterbügel bei einem Wisch-Vorgang entstehen.

Aus der DE 198 33 665 A 1 ist ein weiterer Scheibenwischer für ein Kraftfahrzeug bekannt. Ein Wischarm ist mit einem Wischblatt über ein Kupplungsteil verbunden. Das Kupplungsteil umfasst einen geschlitzten Wischarm-Rastkörper, der in eine Rastausnehmung des Wischarms rastet. Hierdurch entsteht eine gelenkige Verbindung.

Der Erfindung liegt die Aufgabe zugrunde, einen Scheibenwischer der oben beschriebenen Art derart weiterzuentwickeln, dass eine möglichst einfach montierbare und haltbare gelenkige Verbindung zwischen Tragbügel und Unterbügel geschaffen wird. Außerdem soll ein Reiben zwischen dem Tragbügel und dem Unterbügel vermieden werden.

Die Aufgabe wird durch die im kennzeichnenden Teil des Anspruches 1 angegebenen Merkmale gelöst. Der Kern der Erfindung besteht darin, bei dem Gelenk einen Gelenk-Grundkörper vorzusehen, der in den Unterbügel von unten einschiebbar ist. Der Gelenk-Grundkörper ist mit einem Unterbügel-Rastkörper zur Verrastung mit dem Unterbügel verbunden. Der Unterbügel-Rastkörper weist ferner einen Tragbügel-Rastkörper zur Verrastung mit dem Tragbügel auf. Der Unterbügel-Rastkörper weist einen Federschlitz auf. Dieser ermöglicht das Zusammendrücken des Unterbügel-Rastkörpers.

Gemäß Anspruch 2 sind zwei Unterbügel-Rastkörper vorgesehen. Hierdurch ist eine Festlegung des Gelenks gegenüber dem Unterbügel möglich.

Gemäß Anspruch 3 sind die beiden Unterbügel-Rastkörper elastisch gegeneinander verschwenkbar. Dies erleichtert die Montage.

Zusätzliche Merkmale und Einzelheiten der Erfindung ergeben sich aus der Beschreibung von einem Ausführungsbeispiel anhand der Zeichnung. Es zeigt:

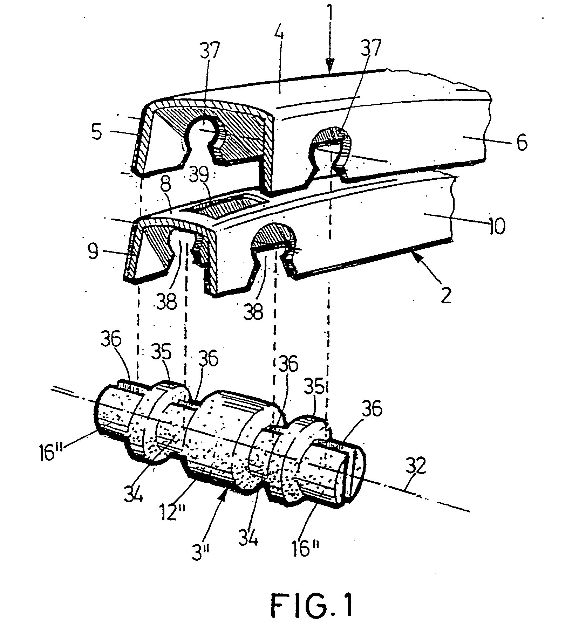

- Fig. 1: eine Explosionsdarstellung eines Tragbügels mit Gelenk und Unterbügel

Ein Scheibenwischer für ein Kraftfahrzeug ist an dem freien Ende eines Wischarmes, der mit einem Kraftfahrzeug verbunden ist, angelenkt. Der Scheibenwischer weist einen zentralen, mit dem Wischarm verbundenen Tragbügel 1, der auch als Mittelbügel bezeichnet wird, auf. Im Bereich der beiden freien Enden des Tragbügels 1 ist jeweils ein Unterbügel 2, der auch als Krallenbügel bezeichnet wird, über ein Gelenk 3", das aus POM oder einem anderen geeigneten Kunststoff gefertigt ist, angelenkt. An den freien Enden der beiden Unterbügel 2 ist ein Wischgummi oder wieder ein Unterbügel 2 befestigt.

Der Tragbügel 1, der aus Metall besteht, weist einen nach unten offenen, U-förmigen Querschnitt auf und wird durch einen Tragbügel-Grund 4 und zwei, sich von dessen Rand senkrecht nach unten erstreckenden Tragbügel-Schenkeln 5, 6 gebildet, wobei der Grund 4 und die Schenkel 5, 6 einteilig miteinander ausgebildet sind.

Der aus Metall bestehende Unterbügel 2 weist ebenfalls einen nach unten offenen, U-förmigen Querschnitt auf und wird durch einen Unterbügel-Grund 8 und zwei, sich von dessen Rand senkrecht nach unten erstreckenden Unterbügel-Schenkeln 9, 10 gebildet, wobei der Grund 8 und die Schenkel 9, 10 einteilig miteinander ausgebildet sind. Der Tragbügel 1 ist so dimensioniert, dass er den Unterbügel 2 mit einem Spiel teilweise umgreifen kann.

Das Gelenk 3" weist im wesentlichen die Form eines zylindrischen Stiftes auf. Das Gelenk 3" weist einen zylinderförmigen Gelenk-Grundkörper 12" sowie einen auf beiden Stirnseiten vorgesehenen zylinderförmigen Rasthals 34 auf, der als Unterbügel-Rastkörper ausgebildet ist und einen Durchmesser aufweist, der geringer ist als der Durchmesser des Gelenk-Grundkörpers 12". An den äußeren Stirnseiten der Rasthälse 34 sind Führungsringe 35 vorgesehen, deren Durchmesser größer ist als der der Rasthälse 34, jedoch kleiner als der des Gelenk-Grundkörpers 12". Auf der äußeren Stirnseite der Führungsringe 35 ist jeweils ein zylindrischer Rastzapfen 16" vorgesehen, dessen Durchmesser im wesentlichen dem der Rasthälse 34 entspricht. Die Rasthälse 34 und die Rastzapfen 16" weisen diese mittig halbierende Federschlitze 36 auf. Der Gelenk-Grundkörper 12", die Rasthälse 34, die Führungsringe 35 und die Rastzapfen 16" sind einteilig ausgebildet. Das Gelenk 3"ist bezüglich einer durch den Grundkörper 12" senkrecht zur Schwenkachse 32 verlaufenden SymmetrieEbene spiegelsymmetrisch. Darüber hinaus ist die Außenkontur des Gelenks invariant gegenüber Drehungen um die Schwenkachse 32.

Der Tragbügel 1 weist einander gegenüberliegende Tragbügel-Rastausnehmungen 37 auf, die in den Schenkeln 5, 6 angeordnet sind und die die Form eines nach unten offenen Schlüsselloches haben. Der Unterbügel 2 weist in den Schenkeln 9 und 10 zwei zueinander gegenüberliegende Unterbügel-Rastausnehmungen 38 auf, die ebenfalls die Form eines nach unten offenen Schlüsselloches haben. Zwischen den Rastausnehmungen 38 ist in dem Grund 8 eine Grundkörper-Ausnehmung 39 mit im wesentlichen rechteckigen Querschnitt vorgesehen.

Zur Montage wird der Unterbügel 2 auf das Gelenk 3" geschoben, wobei die Rasthälse 34 mit den Unterbügel-Rastausnehmungen 38 verrasten. Durch die Federschlitze 36 sind die Rasthälse 34 in gewissem Umfang elastisch zusammendrückbar, so dass ein Schieben durch die engste Stelle der schlüssellochförmigen Rastausnehmung 38 möglich ist. Anschließend wird der Tragbügel 1, den Unterbügel 2 teilweise umgreifend, auf die Rastzapfen 16" aufgeschoben, wobei diese in den rastenden Eingriff mit den Rastausnehmungen 37 kommen. Die Federschlitze 36 erfüllen hier dieselbe Funktion. Ein Fixieren des Gelenks 3" entlang der Schwenkachse 32 wird dadurch erreicht, dass der Grundkörper 12" teilweise durch die Grundkörper-Ausnehmung 39, die hinsichtlich ihrer Breite der Breite des Gelenk-Körpers 12" angepaßt ist, hindurch geschoben wird. Die Führungsringe 35 sorgen dafür, dass der Tragbügel 1 in einem vorgegebenen Abstand zum Unterbügel 2 um die Schwenkachse 32 verschwenkbar ist, so dass es nicht zu einem Reiben der Schenkel 5 und 9 bzw. 6 und 10 aneinander kommt.

Der Vorteil des Gelenks 3" besteht darin, dass die Montage von Unterbügel 2 und Tragbügel 1, die beide aus Metall bestehen, einfach, schnell und automatisch erfolgen kann, da lediglich ein Verrasten der Teile miteinander durchgeführt werden muß. Von besonderem Vorteil ist, dass das Gelenk 3" spiegelsymmetrisch ausgebildet ist. Damit ist bei der automatischen Montage eine ansonsten komplizierte Orientierung des Gelenks 3" nicht erforderlich, wodurch die automatische Montage stark beschleunigt werden kann.

## Patentansprüche

1. Scheibenwischer für Kraftfahrzeuge, mit
a) einem Tragbügel (1) zur Verbindung mit einem an einem Kraftfahrzeug befestigten Wischarm, wobei der Tragbügel (1)
i) einen im wesentlichen U-förmigen Querschnitt und
ii) mindestens eine Tragbügel-Rastausnehmung (37) aufweist,
b) mindestens einem Unterbügel (2) zur Verbindung mit einem Wischgummi, wobei der Unterbügel (2)
i) einen im wesentlichen U-förmigen Querschnitt aufweist,
ii) mindestens eine Unterbügel-Rastausnehmung (38) aufweist und
iii) von dem Tragbügel (1) zumindest teilweise umgriffen wird, und
c) einem Gelenk (3") zur Anlenkung des mindestens einen Unterbügels (2) an dem Tragbügel (1), wobei das Gelenk (3 ")
i) einen von dem Unterbügel (2) zumindest teilweise umgriffenen Gelenk-Grundkörper (12"),
ii) mindestens einen mit dem Gelenk-Grundkörper (12") verbundenen Unterbügel-Rastkörper (34) zur Verrastung mit der mindestens einen Unterbügel-Rastausnehmung (38) und
iii) mindestens einen an dem mindestens einen Unterbügel-Rastkörper (34) vorgesehenen Tragbügel-Rastkörper (16'') zur Verrastung mit der mindestens einen Tragbügel-Rastausnehmung (37) aufweist,
**dadurch gekennzeichnet, dass**
d) das Gelenk (3") im wesentlichen die Form eines zylindrischen Stifts aufweist,
e) der mindestens eine Unterbügel-Rastkörper (34) einen Federschlitz (36) aufweist,
f) der mindestens eine Tragbügel-Rastkörper (16") einen Federschlitz (36) aufweist, und
g) zwischen dem mindestens einen Unterbügel-Rastkörper (34) und dem mindestens einen Tragbügel-Rastkörper (16") ein Führungsring (35) vorgesehen ist, dessen Durchmesser größer als der des Unterbügel-Rastkörpers (34) und des Tragbügel-Rastkörpers (16") ist.

2. Scheibenwischer gemäß Anspruch 1, **dadurch gekennzeichnet, dass** zwei Unterbügel-Rastkörper (34) vorgesehen sind.

3. Scheibenwischer gemäß Anspruch 2, **dadurch gekennzeichnet, dass** die beiden Unterbügel-Rastkörper (34) elastisch gegeneinander verschwenkbar sind.

4. Scheibenwischer gemäß Anspruch 1, **dadurch gekennzeichnet, dass** der mindestens eine Tragbügel-Rastkörper (16") einen im wesentlichen kreisförmigen Querschnitt aufweist.

## Claims

1. Windscreen wiper for motor vehicles, having
a) a supporting bracket (1) for connection to a wiper arm fastened to a motor vehicle, the supporting bracket (1)
i) having an essentially U-shaped cross section and
ii) at least one supporting-bracket latching recess (37),
b) at least one secondary bracket (2) for connection to a wiper rubber, the secondary bracket (2)
i) having an essentially U-shaped cross section,
ii) at least one secondary-bracket latching recess (38) and
iii) being at least partially fitted around by the supporting bracket (1), and
c) a joint (3'') for coupling the at least one secondary bracket (2) to the supporting bracket (1), the joint (3'')
i) having a main oint body (12'') which is at least partially fitted around by the secondary bracket (2),
ii) at least one secondary-bracket latching body (34) which is connected to the main joint body (12'') and is intended for latching to the at least one secondary-bracket latching recess (38), and
iii) at least one supporting-bracket latching body (16'') which is provided on the at least one secondary-bracket latching body (34) and is intended for latching to the at least one supporting-bracket latching recess (37),
**characterized in that**
d) the joint (3'') is essentially in the form of a cylindrical pin,
e) the at least one secondary-bracket latching body (34) has a spring slot (36),
f) the at least one supporting-bracket latching body (16'') has a spring slot (36), and
g) a guide ring (35), the diameter of which is larger than that of the secondary-bracket latching body (34) and of the supporting-bracket latching body (16''), is provided between the at least one secondary-bracket latching body (34) and the at least one supporting-bracket latching body (16'').

2. Windscreen wiper according to Claim 1,
**characterized in that** two secondary-bracket latching bodies (34) are provided.

3. Windscreen wiper according to Claim 2,
**characterized in that** the two secondary-bracket latching bodies (34) can be pivoted elastically relative to each other.

4. Windscreen wiper according to Claim 1,
**characterized in that** the at least one supporting-bracket latching body (16'') has an essentially circular cross section.

## Revendications

1. Essuie-glace pour véhicules automobiles, comprenant
a) une branche porteuse (1) reliée à un bras d'essuie-glace fixé à un véhicule automobile, la branche porteuse (1) présentant
i) une section transversale pour l'essentiel en forme de U et
ii) au moins un évidement d'encliquetage de branche porteuse (37),
b) au moins une branche inférieure (2) reliée à un balai d'essuie-glace, la branche inférieure (2) présentant
i) une section transversale pour l'essentiel en forme de U,
ii) au moins un évidement d'encliquetage de branche inférieure (38) et
iii) étant au moins partiellement entourée par la branche porteuse (1), et
c) une articulation (3") pour l'au moins une branche inférieure (2) au niveau de la branche porteuse (1), l'articulation (3") présentant
i) un élément de base d'articulation (12") au moins partiellement entouré par la branche inférieure (2),
ii) au moins un élément d'encliquetage de branche inférieure (34) relié à l'élément de base d'articulation (12") pour s'engager avec l'au moins un évidement de branche inférieure (38) et
iii) au moins un élément d'encliquetage de branche porteuse (16") prévu au niveau de l'au moins un élément d'encliquetage de branche inférieure (34) pour s'engager avec l'au moins un évidement de branche porteuse (37),
**caractérisé en ce que**
d) l'articulation (3") présente pour l'essentiel la forme d'une tige cylindrique,
e) l'au moins un élément d'encliquetage de branche inférieure (34) présente une fente élastique (36),
f) l'au moins un élément d'encliquetage de branche porteuse (16") présente une fente élastique (36), et
g) il est prévu entre l'au moins un élément d'encliquetage de branche inférieure (34) et l'au moins un élément d'encliquetage de branche porteuse (16") un anneau de guidage (35) dont le diamètre est supérieur à celui de l'élément d'encliquetage de branche inférieure (34) et de l'élément d'encliquetage de branche porteuse (16").

2. Essuie-glace selon la revendication 1,
**caractérisé en ce qu'**
il est prévu deux éléments d'encliquetage de branche inférieure (34).

3. Essuie-glace selon la revendication 2,
**caractérisé en ce que**
les deux éléments d'encliquetage de branche inférieure (34) peuvent pivoter de façon élastique l'un par rapport à l'autre.

4. Essuie-glace selon la revendication 1,
**caractérisé en ce que**
l'au moins un élément d'encliquetage de branche porteuse (16") présente une section transversale pour l'essentiel circulaire.
